# EUROPÄISCHE PATENTSCHRIFT

(11) **EP 2 790 947 B1**
(45) Veröffentlichungstag und Bekanntmachung des Hinweises auf die Patenterteilung: **22.07.2015**
(21) Anmeldenummer: 12775009.9
(22) Anmeldetag: 16.10.2012
(51) Int. Cl.: B60K 26/02

(54) **VERFAHREN UND STEUERGERÄT ZUM STEUERN VON VORHERSEHBAREN HAPTISCH WAHRNEHMBAREN SIGNALEN IN EINEM FAHRPEDAL EINES KRAFTFAHRZEUGS**
METHOD AND CONTROL DEVICE FOR CONTROLLING FORESEEABLE HAPTICALLY PERCEIVABLE SIGNALS IN AN ACCELERATION PEDAL OF A MOTOR VEHICLE
PROCÉDÉ ET DISPOSITIF DE COMMANDE POUR COMMANDER DES SIGNAUX POUVANT ÊTRE PERÇUS DE FAÇON HAPTIQUE DANS UNE PÉDALE D'ACCÉLÉRATEUR D'UN VÉHICULE À MOTEUR

(30) Priorität: 12.12.2011 DE 102011088309
(43) Veröffentlichungstag der Anmeldung: 22.10.2014
(73) Patentinhaber: Robert Bosch GmbH, 70442 Stuttgart (DE)
(72) Erfinder: SIEBER, Udo, 74321 Bietigheim (DE); DEISSLER, Markus, 74172 Neckarsulm (DE); HENNING, Daniel, 74372 Sersheim (DE)
(86) Internationale Anmeldenummer: PCT/EP2012/070460
(87) Internationale Veröffentlichungsnummer: WO 2013/087259

(56) Entgegenhaltungen:
- EP-A1- 1 707 462
- WO-A1-2010/130605
- DE-A1- 19 916 434
- DE-A1-102009 045 710

## Beschreibung

### Gebiet der Erfindung

Die vorliegende Erfindung betrifft ein Verfahren sowie ein Steuergerät zum Steuern eines haptischen Fahrpedals in einem Kraftfahrzeug. Die Erfindung betrifft ferner ein Computerprogrammprodukt, das beim Ausführen auf einem programmierbaren Steuergerät das erfindungsgemäße Verfahren ausführen soll, sowie ein computerlesbares Medium, auf dem ein solches Computerprogrammprodukt gespeichert ist.

### Stand der Technik

In modernen Kraftfahrzeugen wird der Fahrer durch eine Vielzahl von zur Verfügung gestellten Informationen beim Führen des Fahrzeugs unterstützt. Beispielsweise kann es hilfreich sein, dem Fahrer Rückmeldungen über bestimmte Fahrzustände oder Aufforderungen an den Fahrer, bestimmte Maßnahmen zu treffen, zu signalisieren, um die Sicherheit beim Fahren oder den Komfort des Fahrers erhöhen zu können oder um Treibstoff einsparen zu können. Diese Rückmeldungen können auf verschiedene Weise wie zum Beispiel optisch oder akustisch bereitgestellt werden.

In modernen Kraftfahrzeugen werden zusätzlich auch Möglichkeiten einer haptischen Rückmeldung an den Fahrer über das Fahrpedal des Fahrzeugs implementiert. Das Fahrpedal ist hierzu mit einem Aktuator ausgestattet, der es ermöglicht, das Fahrpedal gezielt mit einer Kraft zu beaufschlagen. Beispielsweise kann der Aktuator ab einer bestimmten Fahrpedallage einem weiteren Niederdrücken des Fahrpedals gezielt entgegenwirken, um einen Fahrer so beispielsweise zu signalisieren, dass ein stärkeres Niederdrücken des Fahrpedals zu einer überproportionalen Erhöhung des Kraftstoffverbrauchs führen würde. Alternativ kann mit Hilfe des Aktuators eine zeitlich variierende Kraft auf das Fahrpedal ausgeübt werden, um dieses in Schwingungen zu versetzen, beispielsweise in Form von Vibrationen oder Pulsationen. Auf diese Weise können dem Fahrer durch dessen haptische Wahrnehmung Hinweise und Warnungen mitgeteilt oder auch Komfortfunktionen bereitgestellt werden, ohne dass dieser durch optische oder akustische Signale beispielsweise vom Beobachten des Verkehrs abgelenkt würde.

DE 25 55 429 beschreibt ein System zur Erzeugung von taktilen bzw. haptisch wahrnehmbaren Signalen in einem Fahrzeug.

### Offenbarung der Erfindung

Die vorliegende Erfindung ermöglicht in ihren Ausführungsformen ein vorteilhaftes Ansteuern eines haptischen Fahrpedals in einem Kraftfahrzeug. Insbesondere kann die Erfindung ein kurzfristiges Erzeugen eines haptisch wahrnehmbaren Signals in dem Fahrpedal ermöglichen, wobei ein Energieverbrauch für den Aktuator des Fahrpedals gering gehalten werden kann.

Bei dem hier vorgeschlagenen Verfahren kann das haptische Fahrpedal innerhalb eines Verlagerungsbereichs zwischen einer Ruheposition und einer maximal betätigten Position verlagert werden und mittels eines Aktuators zur Erzeugung eines haptisch wahrnehmbaren Signals angeregt werden. Dabei wird zuerst eine vorhersehbare Signalposition, d.h. eine von dem Fahrpedal einnehmbare Position, an der von dem Fahrpedal zu einem zukünftigen Zeitpunkt vorhersehbar ein haptisch wahrnehmbares Signal erzeugt werden soll, ermittelt. Die vorhersehbare Signalposition gibt dabei eine Lage des Fahrpedals zwischen der Ruheposition und der maximal betätigten Position wieder. Während sich das Fahrpedal in einer aktuellen Position zwischen der Ruheposition und der vorhersehbaren Signalposition befindet, wird dann der Aktuator gezielt derart angeordnet, dass der Aktuator mit dem Fahrpedal in Wirkverbindung kommt, wenn das Fahrpedal die vorhersehbare Signalposition erreicht.

Dem erfindungsgemäßen Ansteuerungsverfahren zugrunde liegende Motivationen bzw. Ideen können unter anderem darin gesehen werden, dass der Aktuator eines haptischen Fahrpedals möglichst so angesteuert werden soll, dass zumindest haptisch wahrnehmbare Signale, die in Zukunft generiert werden sollen und deren Auftreten vorhergesagt werden kann, möglichst kurzfristig, das heißt mit kurzen Ansprechzeiten, erzeugt werden können. Dabei soll der für eine Umsetzung dieses Verfahrens notwendige Energiebedarf gering gehalten werden.

Unter einer "vorhersehbaren Signalposition" kann dabei eine Positionierung oder Lage des Fahrpedals verstanden werden, an der vorhersehbar bestimmte haptisch wahrnehmbare Signale erzeugt werden sollen. Mit anderen Worten hängt die Auslösung dieser bestimmten Signale unter anderem von der aktuellen Position, die das Fahrpedal, gedrückt durch den Fahrer, einnimmt, ab. Wenn das Fahrpedal die ermittelte vorhersehbare Signalposition erreicht, soll der Aktuator in der Lage sein, möglichst schnell ein haptisch wahrnehmbares Signal durch Kraftausübung auf das Fahrpedal zu erzeugen.

Beispielsweise kann eine wichtige Funktion eines haptischen Fahrpedals darin liegen, einem Fahrer beim Durchdrücken des Fahrpedals eine Grenze für verbrauchsgünstigen Betrieb zu signalisieren. Dies kann beispielsweise in Form eines variablen Druckpunktes dargestellt werden. Die vorhersehbare Signalposition kann somit als Druckpunktposition bezeichnet werden. Wenn das Fahrpedal die Druckpunktposition erreicht, soll dabei der Aktuator das Fahrpedal mit einer zusätzlichen Rückstellkraft beaufschlagen, um ein weiteres Durchdrücken des Fahrpedals zu erschweren.

Um unabhängig von der Geschwindigkeit, mit der der Fahrer das Fahrpedal durchdrückt, den Druckpunkt tatsächlich zeitnah dann zu generieren, wenn bei weiterem Durchdrücken des Fahrpedals eine überproportionale Erhöhung des Kraftstoffverbrauchs droht, sollte der Aktuator in der Lage sein, innerhalb weniger Millisekunden seine Kraft auf das Fahrpedal geben zu können.

Dies könnte beispielsweise durch eine geeignete feste mechanische Kopplung zwischen dem Aktuator und dem Hebel des Fahrpedals sichergestellt werden. Eine solche Kopplung könnte aber bei Betätigung des Fahrpedals inakzeptable Effekte, beispielsweise hinsichtlich einer Trägheit aufgrund einer Schwergängigkeit bei starker Beschleunigung des Fahrpedalhebels oder hinsichtlich einer Welligkeit im Pedalkraftverlauf beispielsweise aufgrund von magnetischen Rastmomenten des Elektromotors, bewirken.

Um diese Effekte zu reduzieren oder zu eliminieren, könnte eine geeignete Lagefolgeregelung für den Aktuator eingesetzt werden. Dies könnte jedoch einen erhöhten Energiebedarf durch ein ständiges synchrones Mitbewegen des Aktuators mit dem Fahrpedal mit sich bringen.

Um diese Nachteile zu vermeiden, wird nun vorgeschlagen, den Aktuator im Allgemeinen so anzuordnen, dass er an einer Zwischenposition innerhalb des Verlagerungsbereichs des Fahrpedals mit dem Fahrpedal in Wirkverbindung tritt. Mit anderen Worten soll der Aktuator weder dauerhaft mit dem Fahrpedal gekoppelt sein noch sich in Zeiträumen, in denen keine Erzeugung eines haptisch wahrnehmbaren Signals angefordert wird, außerhalb des Verlagerungsbereichs des Fahrpedals befinden und erst für eine konkret angeforderte Signalerzeugung verlagert und in Wirkverbindung mit dem Fahrpedal gebracht werden. Stattdessen soll der Aktuator bereits während eines Zeitraums, in dem aktuell keine haptisch wahrnehmbaren Signale erzeugt werden sollen, an einer Position angeordnet werden, von der angenommen wird, dass zu einem zukünftigen Zeitpunkt ein haptisch wahrnehmbares Signal erzeugt werden soll, wenn das Fahrpedal diese Position erreicht.

Die vorhersehbare Signalposition kann dabei beispielsweise ausschließlich innerhalb eines Teilbereichs von zwischen 5 % und 95 %, vorzugsweise zwischen 15 % und 85 %, des gesamten Verlagerungsbereichs des Fahrpedals liegen. Anders ausgedrückt kann die vorhersehbare Signalposition in einem mittigen Bereich entfernt von sowohl der Ruheposition als auch von der maximal betätigten Position des Fahrpedals liegen, beispielsweise 30 % oberhalb und unterhalb der geometrischen Mitte zwischen diesen beiden Extrempositionen.

Durch das Anordnen des Aktuators für eine Wirkverbindung mit dem Fahrpedal in einer solchen Zwischenposition kann das vorhersehbare haptisch wahrnehmbare Signal, wenn das Fahrpedal die vorhersehbare Signalposition erreicht, sehr schnell erzeugt werden, da zu diesem Zeitpunkt bereits ein mechanischer Kontakt zwischen dem Aktuator und dem Fahrpedal besteht oder zumindest nur ein sehr geringer Verfahrweg des Aktuators nötig ist, um einen solchen Kontakt herzustellen. Andererseits kann sich das Fahrpedal in einem Verlagerungsteilbereich zwischen der Ruheposition und der vorhersehbaren Signalposition frei bewegen, ohne dass es von dem Aktuator beeinflusst würde, da mit dem Aktuator zu diesem Zeitpunkt keine Wirkverbindung besteht.

Die vorhersehbare Signalposition kann abhängig von einer Fahrsituation oder abhängig von einem Betriebszustand des Fahrzeugs sein und somit zeitlich variieren. Die Anordnung des Aktuators kann dabei kontinuierlich an die zeitlich variierende vorhersehbare Signalposition angepasst werden.

Beispielsweise kann bei einer Ausgestaltung des oben beschriebenen variablen Druckpunktes zum Signalisieren eines kraftstoffsparenden Fahrverhaltens die Pedalposition, bei deren Überschreiten ein Kraftstoffverbrauch überproportional ansteigen würde, von vielen äußeren Einflussfaktoren abhängen. Beispiele hierfür können ein Betriebszustand des Motors, ein eingelegter Getriebegang, eine Steigung oder ein Gefälle der aktuell befahrenen Strecke, etc. sein. Abhängig von solchen äußeren Einflussfaktoren kann somit ermittelt werden, bei welcher Position des Fahrpedals der von dem Aktuator bewirkte variable Druckpunkt, das heißt, die von dem Aktuator zu bewirkende Erhöhung einer Gegenkraft auf das Fahrpedal, einsetzen soll, um so die vorhersehbare Signalposition zu definieren.

Da sich die äußeren Einflussfaktoren und damit die vorhersehbare Signalposition mit der Zeit ändern können, kann die Anordnung des Aktuators entsprechend nachgeführt werden. Hierzu kann eine geeignete Lageregelung für den Aktuator vorgesehen sein. Deren Energieverbrauch kann verhältnismäßig gering sein, da die Lage der vorhersehbaren Signalposition sich in der Regel allenfalls langsam ändert. Mit anderen Worten muss der Aktuator nicht wie beispielsweise bei einer Lagefolgeregelung, bei der der Aktuator einer aktuellen Position des Fahrpedals folgt, ständig unter Energieeinsatz verlagert werden, sondern kann über lange Zeiträume in einer festen Zwischenposition ruhen. Nur wenn sich aufgrund einer Änderung der äußeren Einflussfaktoren die vorhersehbare Signalposition ändert, wird die Anordnung des Aktuators entsprechend angepasst.

Wenn aufgrund eines nicht vorhergesehenen Ereignisses ein haptisch wahrnehmbares Signal erzeugt werden soll, kann die Anpassung der Anordnung des Aktuators an die vorhersehbare Signalposition temporär unterbrochen werden und der Aktuator temporär derart angesteuert werden, dass er aktuell mit dem Fahrpedal in Wirkverbindung kommt, um das haptisch wahrnehmbare Signal zu erzeugen.

Mit anderen Worten kann es notwendig sein, zusätzlich zu den vorhersehbaren Signalanforderungen, deren Auslösung insbesondere abhängig von der aktuellen Position des Fahrpedals sein kann, auch andere haptisch wahrnehmbare Signale zu erzeugen.

Beispielsweise kann eine Warnfunktion vorsehen, dem Fahrer haptisch zu signalisieren, wenn wegen einer voraus liegenden Kurve oder einer Ortseinfahrt vom Gas gegangen werden sollte, wobei ein solches haptisches Signal unabhängig von der aktuellen Stellung des Fahrpedals erzeugt werden soll.

In solchen Fällen kann der Aktuator temporär in Wirkverbindung mit dem Fahrpedal verlagert werden. Hierbei kann es vorteilhaft sein, dass der Aktuator zuvor nicht in einer Ruhelage außerhalb des Verlagerungsbereichs des Fahrpedals angeordnet ist und somit weit bis hin zur aktuellen Position des Fahrpedals verlagert werden muss, sondern sich bereits in einer Zwischenposition innerhalb des Verlagerungsbereichs befindet, wodurch der Weg zur aktuellen Position des Fahrpedals und somit eine Ansprechdauer bis zum Erzeugen des haptisch wahrnehmbaren Signals verkürzt werden können.

Die oben beschriebenen Ausführungsformen von erfindungsgemäßen Verfahren und die damit erreichbaren Funktionalitäten und Vorteile können durch ein in einem Fahrzeug vorgesehenes Steuergerät zum Steuern des haptischen Fahrpedals implementiert werden.

Das Steuergerät kann dabei dazu ausgelegt sein, über geeignete Schnittstellen Steuersignale an einen in dem Aktuator enthaltenen Antriebsmotor auszugeben. Außerdem kann das Steuergerät Schnittstellen aufweisen, um beispielsweise von geeigneten Sensoren Informationen über eine aktuelle Position des Fahrpedals und/oder auf das Fahrpedal ausgeübte Kräfte empfangen zu können. Weiterhin können Schnittstellen vorgesehen sein, um beispielsweise Einflussparameter einlesen zu können, die für eine Ermittlung der vorhersehbaren Signalposition relevant sein können. Beispielsweise kann eine Schnittstelle hin zu einem Motorsteuergerät vorgesehen sein, mit Hilfe derer erkannt werden kann, in welchem Betriebszustand sich der Motor befindet und wann sich der Kraftstoffverbrauch des Motors bei stärkerem Betätigen des Fahrpedals massiv erhöhen würde.

Das Steuergerät kann das vorgeschlagene Steuerverfahren sowie etwaige Informationsauswertungen von Sensorsignalen in Hardware und/oder in Software implementieren. Es kann vorteilhaft sein, ein programmierbares Steuergerät für die Ausführung des oben beschriebenen Verfahrens zu programmieren. Hierzu kann ein Computerprogrammprodukt computerlesbare Anweisungen aufweisen, die das programmierbare Steuergerät dazu anweisen, die Schritte des jeweiligen Verfahrens durchzuführen. Das Computerprogrammprodukt kann auf einem computerlesbaren Medium wie beispielsweise einer CD, einer DVD, einem Flashspeicher, einem ROM, einem EPROM oder ähnlichem gespeichert sein. Um die von dem Aktuator einzunehmende Anordnung korrekt ansteuern zu können, kann neben der Verarbeitung weiterer Sensordaten auch in einer Datenbank oder in Form von Kennlinien gespeicherte Information über ein von dem Aktuator durchgeführtes Reaktionsverhalten auf bestimmte Steuerungssignale herangezogen werden.

Es wird angemerkt, dass mögliche Merkmale und Vorteile von Ausführungsformen der Erfindung hierin teilweise mit Bezug auf ein erfindungsgemäßes Verfahren und teilweise mit Bezug auf ein erfindungsgemäßes Steuergerät beschrieben sind. Ein Fachmann wird erkennen, dass die einzelnen Merkmale in geeigneter Weise miteinander kombiniert oder ausgetauscht werden können, insbesondere von dem Steuergerät auf das Verfahren und umgekehrt übertragen werden können, um auf diese Weise zu weiteren Ausführungsformen und möglicherweise Synergieeffekten gelangen zu können.

### Kurze Beschreibung der Zeichnungen

Nachfolgend werden Ausführungsformen der Erfindung mit Bezug auf die beigefügten Zeichnungen beschrieben. Weder die Beschreibung noch die Zeichnungen sollen dabei als die Erfindung einschränkend ausgelegt werden.
- Figur 1: zeigt ein Kraftfahrzeug mit einem Steuergerät zum Ausführen eines Verfahrens gemäß einer Ausführungsform der vorliegenden Erfindung;
- Figur 2: zeigt ein haptisches Fahrpedal mit einem Steuergerät gemäß einer Ausführungsform der vorliegenden Erfindung;
- Figur 3(a)-(d): veranschaulicht verschiedene Betriebszustände eines erfindungsgemäß gesteuerten haptischen Fahrpedals.

Die Figuren sind lediglich schematisch und nicht maßstabsgetreu.

### Ausführungsformen der Erfindung

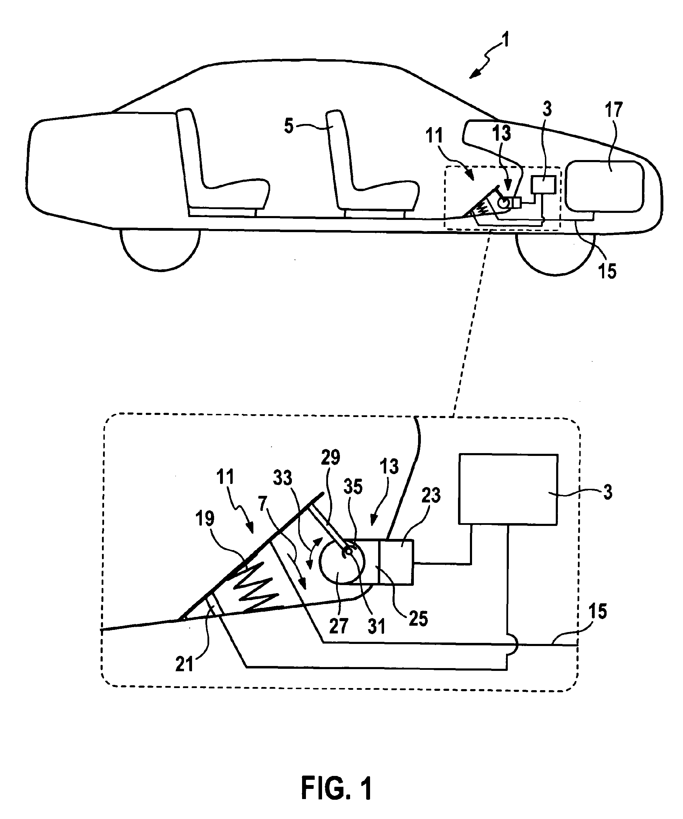

Figur 1 zeigt eine Schnittansicht eines Fahrzeugs 1 mit einem haptischen Fahrpedal 11. Durch Niederdrücken des Fahrpedals kann ein auf einem Sitz 5 sitzender Fahrer einen Motor 17 des Fahrzeugs 1 über einen Seilzug 15 oder eine mit einem Motorsteuergerät verbundene Leitung (nicht dargestellt) zum Beschleunigen des Fahrzeugs veranlassen. Der Fahrer muss hierzu das Fahrpedal 11 in Richtung des Pfeils 7 niederdrücken, wodurch sich das Fahrpedal 11, ausgehend von einer Ruheposition entlang eines Verlagerungsbereichs hin zu einer maximal betätigten Position, verlagern lässt. Ein Positionssensor 21 kann dabei die aktuelle Position bzw. Lage des Fahrpedals 11 bestimmen. Eine Feder 19 spannt das Fahrpedal entgegen der Betätigungsrichtung 7 hin zu der Ruheposition vor.

Das Fahrpedal 11 ist als haptisches Fahrpedal ausgestaltet. Hierzu verfügt das Fahrpedal 11 über einen Aktuator 13, mit Hilfe dessen das Fahrpedal 11 in eine gewünschte Richtung entgegen der Betätigungsrichtung 7 bewegt bzw. in diese mit Kraft beaufschlagt werden kann. Der Aktuator 13 kann hierbei das Fahrpedal 11 zu Schwingungen anregen, beispielsweise in Form von Vibrationen oder Pulsationen. Alternativ kann der Aktuator 13 eine Kraft auf das Fahrpedal 11 ausüben, die ein weiteres Niederdrücken des Fahrpedals 11 erschweren kann und somit von einem Fahrer als Druckpunkt beim Betätigen des Fahrpedals 11 wahrgenommen werden kann.

Der Aktuator 13 kann mit einem Gleichstrommotor 23 betrieben werden, der über ein Getriebe 25 mit einer Betätigungsscheibe 27 gekoppelt ist. Durch Betätigen des Motors 23 kann die Betätigungsscheibe 27, wie durch den Pfeil 33 angedeutet, im oder gegen den Uhrzeigersinn verdreht werden. An der Betätigungsscheibe 27 ist in einem außerzentrischen Bereich ein Nocken 31 vorgesehen. Dieser Nocken 31 kann mit einem an dem Fahrpedal 11 vorgesehenen Stößel 29 zusammenwirken. Hierzu weist der Stößel 29 an seinem zu dem Aktuator 13 gerichteten Ende eine gabelförmige Aufnahme 35 auf, in die der Nocken 31 eingreifen kann, sobald die Betätigungsscheibe 27 in eine entsprechende Position gedreht wurde.

Alternativ kann der Aktuator auch als Direktantrieb beispielsweise mit einem Torquer-Motor ausgestaltet sein, wodurch hohe Kräfte auch ohne ein Getriebe erzeugt werden können.

Der Aktuator 13 wird von einem Steuergerät 3 angesteuert. Das Steuergerät 3 erkennt, wenn einem Fahrer über das Pedal 11 ein haptisch wahrnehmbares Signal übermittelt werden soll, um ihn beispielsweise auf die Möglichkeit einer kraftstoffsparenden Fahrweise oder eine Gefahrensituation hinzuweisen.

Bestimmte Hinweise bzw. haptische Signale können dabei vorhersehbar von einer eingenommenen Position des Fahrpedals abhängen.

Beispielsweise kann das Steuergerät 3 aus zur Verfügung gestellten Informationen über eine aktuelle Fahrsituation und/oder einen aktuellen Betriebszustand des Fahrzeugs ermitteln, in welchem Verlagerungsteilbereich das Fahrpedal 11 bewegt werden kann, ohne dass es zu einem übermäßigen Kraftstoffverbrauch kommt, und an welcher Position innerhalb des Verlagerungsbereichs des Fahrpedals ein weiteres Niederdrücken des Fahrpedals zu einem übermäßig erhöhten Kraftstoffverbrauch führt. Diese Position kann als "vorhersehbare Signalposition" definiert werden.

Bei Erreichen dieser ermittelten vorhersehbaren Signalposition soll der Aktuator eine zusätzliche Kraft auf das Fahrpedal 11 ausüben, um dem Fahrer einen Druckpunkt zu signalisieren und ihn dadurch zu veranlassen, das Fahrpedal nicht weiter durchzudrücken und somit Kraftstoff zu sparen.

Um diese Kraft möglichst zeitnah auf das Fahrpedal 11 übertragen zu können, wird der Aktuator 13, bereits bevor das Fahrpedal die Signalposition erreicht, derart positioniert, dass es beim Erreichen der Signalposition zu einer Wirkverbindung zwischen dem Fahrpedal 11 und dem Aktuator 13 kommt. In dem dargestellten Beispiel bedeutet dies, dass der Motor 23 die Betätigungsscheibe 27 so positioniert, dass der Nocken 31 in eine Signalposition gedreht wird, bei der das Fahrpedal 11 mit der an dem Stößel 29 vorgesehenen Aufnahme 35 gerade dann in mechanischen Kontakt tritt, wenn ein weiteres Niederdrücken des Fahrpedals einen erhöhten Kraftstoffverbrauch mit sich ziehen würde und daher von dem Aktuator 13 eine Gegenkraft auf das Fahrpedal 11 ausgeübt werden soll zur Signalisierung eines Druckpunktes.

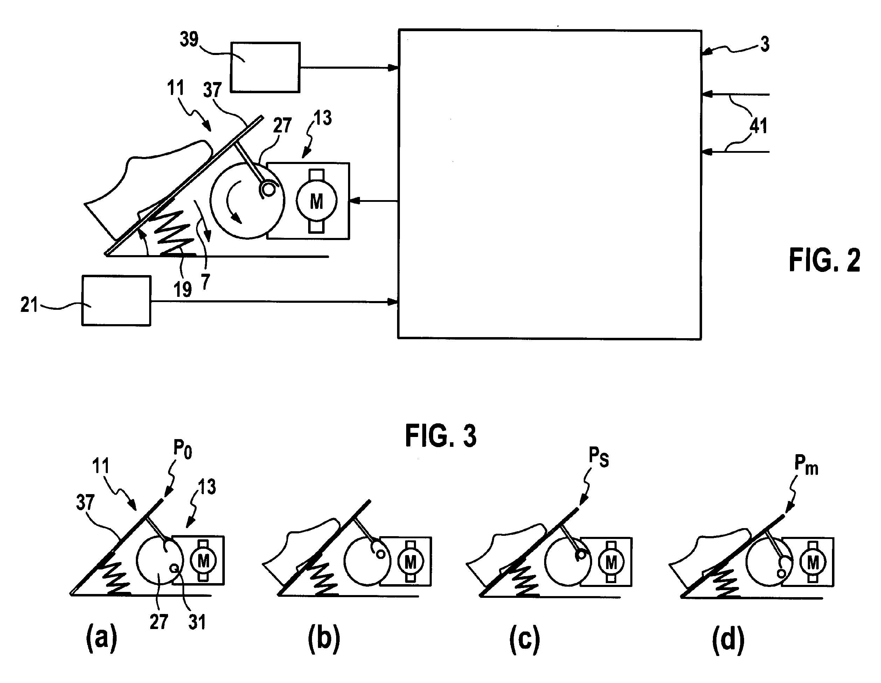

Figur 2 zeigt schematisch den Aufbau eines Pedalsystems mit einem haptischen Fahrpedal 11 und einem zugehörigen Steuergerät 3 gemäß einer Ausführungsform der Erfindung. In den Figuren 3(a)-(d) sind verschiedene Betätigungszustände des Pedalsystems dargestellt.

Ein Pedalhebel 37 kann durch einen Fahrerfuß niedergedrückt werden. Die Rückstellfeder 19 bewirkt dabei eine Gegenkraft, um den Pedalhebel 37 in seine Ruheposition P₀ zu bringen, wie in Figur 3(a) dargestellt.

Ein Aktuator 13 und der Pedalhebel 37 sind aus Sicherheitsgründen mechanisch nur einseitig gekoppelt, das heißt, der Aktuator 13 kann nur Rückstellkräfte entgegen der Betätigungsrichtung 7 auf den Pedalhebel 37 ausüben und ist nicht fähig, den Pedalhebel 37 von seiner Ruheposition P₀ wegzubewegen.

Die aktuelle Stellung bzw. Position des Pedalhebels 37 wird über einen Pedalpositionssensors 21, beispielsweise in Form eines geeigneten Lage- oder Winkelsensors, erfasst. Das Signal des Pedalpositionssensors 21 kann einem in dem Steuergerät 3 vorgesehenen Lageregelkreis des Aktuators 13 zugeführt werden.

Ein Aktuatorpositionssensor 39 kann die aktuelle Anordnung des Aktuators 13 erfassen und an das Steuergerät 3 weiterleiten. Beispielsweise kann eine aktuelle Orientierung der Betätigungsscheibe 27 erkannt werden.

Ohne dass dies in Figur 2 im Detail dargestellt wäre, kann das Steuergerät 3 eine Datenverarbeitungseinheit und gegebenenfalls eine Datenspeichereinheit aufweisen. Diese können Daten von dem Aktuatorpositionssensor 39 und dem Pedalpositionssensor 21, aber auch von anderen Informationsquellen, die über Schnittstellen 41 Informationen an das Steuergerät 3 liefern, verarbeiten und gegebenenfalls zwischenspeichern.

Beispielsweise können über die Schnittstellen 41 Informationen von einem Motorsteuergerät an das Steuergerät 3 des haptischen Fahrpedals 11 weitergeleitet werden, anhand derer erkannt werden kann, ob der Motor 17 bei einer weiter erhöhten Leistungsanforderung durch ein über eine bestimmte Pedalposition weiter niedergetretenes Fahrpedal 11 überproportional mehr Kraftstoff verbrauchen würde.

Nach Ermittlung einer Pedalposition P_{S}, an der vorhersehbar ein haptisch wahrnehmbares Signal erzeugt werden soll, kann das Steuergerät 3 den Aktuator 13 dazu ansteuern, eine Anordnung anzunehmen, bei der er an der ermittelten Signalposition P_{S} in Wirkverbindung mit dem Fahrpedal 11 kommt und somit eine Kraft auf das Fahrpedal 11 ausüben kann.

Ausgehend von der in Figur 3(a) dargestellten Ruhelage, bei der Hebel 37 des Pedals 11 sich beispielsweise zu Beginn einer Fahrt in der Ruheposition P₀ befindet und die Betätigungsscheibe 27 des Aktuators 13 in einer Ruhelage ruht, in der der Nocken 31 außerhalb des Verlagerungsbereichs des Fahrpedals 11 liegt, kann der Aktuator 13 seine Betätigungsscheibe 27 in eine Zwischenposition verdrehen, wie in Figur 3(b) dargestellt. Diese Zwischenposition liegt zwischen der Ruheposition P₀ und einer maximal betätigten Position Pₘ und entspricht einer Position, an der der Aktuator 13 über den Nocken 31 in Wirkverbindung mit dem Fahrpedal 11 kommen soll, wie in Figur 3(c) dargestellt, um vorhersehbar ein haptisch wahrnehmbares Signal, beispielsweise in Form einer Gegenkraft auf das Fahrpedal 11, zu erzeugen. Drückt der Fahrer das Fahrpedal 11 trotz des abgegebenen haptisch wahrnehmbaren Signals weiter nieder, kann die von dem Aktuator 13 ausgeübte Kraft bis zum Erreichen einer voreingestellten Maximalgrenze weiter erhöht werden. Bei Übersteigen dieser Grenze kann der Aktuator 13 die auf das Fahrpedal 11 ausgeübte Kraft zurücknehmen und hierzu beispielsweise zurück in die Ruhelage fahren, wie in Figur 3(d) dargestellt. Dadurch wird ermöglicht, dass das Fahrpedal 11 in die maximal betätigte Position Pₘ ohne weitere, durch den Aktuator 13 bewirkte Kraft niedergedrückt werden kann.

## Patentansprüche

1. Verfahren zum Steuern eines haptischen Fahrpedals (11) in einem Kraftfahrzeug (3), wobei das Fahrpedal (11) innerhalb eines Verlagerungsbereichs zwischen einer Ruheposition (P₀) und einer maximal betätigten Position (Pₘ) verlagerbar ist und mittels eines Aktuators (13) zur Erzeugung eines haptisch wahrnehmbaren Signals angeregt werden kann, **dadurch gekennzeichnet, dass** das Verfahren die folgenden Schritte aufweist:
Ermitteln einer vorhersehbaren Signalposition (Pₛ), an der von dem Fahrpedal (11) zu einem zukünftigen Zeitpunkt vorhersehbar ein haptisch wahrnehmbares Signal erzeugt werden soll, wobei die vorhersehbare Signalposition (Pₛ) zwischen der Ruheposition (P₀) und der maximal betätigten Position (Pₘ) liegt, und
Anordnen des Aktuators (13), während sich das Fahrpedal (11) in einer aktuellen Position zwischen der Ruheposition (P₀) und der vorhersehbaren Signalposition (Pₛ) befindet, derart, dass der Aktuator (13) mit dem Fahrpedal (11) in Wirkverbindung kommt, wenn das Fahrpedal (11) die vorhersehbare Signalposition (Pₛ) erreicht.

2. Verfahren nach Anspruch 1, wobei die vorhersehbare Signalposition (Pₛ) ausschließlich innerhalb eines Teilbereichs von zwischen 5% und 95% des gesamten Verlagerungsbereichs des Fahrpedals (11) liegen kann.

3. Verfahren nach Anspruch 1 oder 2, wobei sich die vorhersehbare Signalposition (Pₛ) abhängig von einer Fahrsituation und/oder abhängig von einem Betriebszustand des Fahrzeugs ändert und wobei die Anordnung des Aktuators (13) kontinuierlich an die zeitlich variierende vorhersehbare Signalposition (Pₛ) angepasst wird.

4. Verfahren einem der Ansprüche 1 bis 3, wobei die vorhersehbare Signalposition (Pₛ) eine Druckpunktposition ist und der Aktuator (13) das Fahrpedal (11) mit einer zusätzlichen Rückstellkraft beaufschlagt, um ein weiteres Niederdrücken des Fahrpedals (11) zu erschweren, wenn das Fahrpedal (11) die Druckpunktposition erreicht.

5. Verfahren nach einem der Ansprüche 1 bis 4, wobei die Anpassung der Anordnung des Aktuators (13) an die vorhersehbare Signalposition (Pₛ) temporär unterbrochen wird, wenn aufgrund eines nicht vorhergesehenen Ereignisses ein haptisch wahrnehmbares Signal erzeugt werden soll, und der Aktuator (13) temporär derart angeordnet wird, dass er aktuell mit dem Fahrpedal (11) in Wirkverbindung kommt, um das haptisch wahrnehmbare Signal zu erzeugen.

6. Steuergerät (3) zum Steuern eines haptischen Fahrpedals (11) in einem Kraftfahrzeug (1), wobei das Steuergerät (3) dazu ausgelegt ist, ein Verfahren gemäß einem der Ansprüche 1 bis 5 durchzuführen.

7. Computerprogrammprodukt, welches computerlesbare Anweisungen aufweist, die ein programmierbares Steuergerät (3) dazu anweisen, ein Verfahren gemäß einem der Ansprüche 1 bis 5 durchzuführen.

8. Computerlesbares Medium mit einem darauf gespeicherten Computerprogrammprodukt gemäß Anspruch 7.

## Claims

1. Method for controlling a haptic accelerator pedal (11) in a motor vehicle (3), wherein the accelerator pedal (11) can be moved between a position of rest (P₀) and a position (Pₘ) of maximum actuation within a movement range, and can be excited by means of an actuator (13) to generate a haptically perceptible signal, **characterized in that** the method comprises the following steps:
determining a predictable signal position (Pₛ) at which it can be predicted that the accelerator pedal (11) is to generate a haptically perceptible signal at a future time, wherein the predictable signal position (Pₛ) is between the position of rest (P₀) and the position (Pₘ) of maximum actuation, and
arranging the actuator (13), while the accelerator pedal (11) is in a current position between the position of rest (P₀) and the predictable signal position (Pₛ), in such a way that the actuator (13) becomes operatively connected to the accelerator pedal (11) when the accelerator pedal (11) reaches the predictable signal position (Pₛ).

2. Method according to Claim 1, wherein the predictable signal position (Pₛ) can be exclusively within a partial range of between 5% and 95% of the entire movement range of the accelerator pedal (11).

3. Method according to Claim 1 or 2, wherein the predictable signal position (Pₛ) changes as a function of a driving situation and/or as a function of an operating state of the vehicle, and wherein the arrangement of the actuator (13) is continuously adapted to the predictable signal position (Pₛ) which varies over time.

4. Method according to one of Claims 1 to 3, wherein the predictable signal position (Pₛ) is a pressure point position and the actuator (13) applies an additional restoring force to the accelerator pedal (11) in order to make further depression of the accelerator pedal (11) more difficult when the accelerator pedal (11) reaches the pressure point position.

5. Method according to one of Claims 1 to 4, wherein the adaptation of the arrangement of the actuator (13) to the predictable signal position (Pₛ) is temporarily interrupted if a haptically perceptible signal is to be generated owing to an unpredicted event and the actuator (13) is temporarily arranged in such a way that at that particular time it becomes operatively connected to the accelerator pedal (11) in order to generate the haptically perceptible signal.

6. Control device (3) for controlling a haptic accelerator pedal (11) in a motor vehicle (1), wherein the control device (3) is configured to carry out a method according to one of Claims 1 to 5.

7. Computer program product which has computer-readable instructions which instruct a programmable control device (3) to carry out a method according to one of Claims 1 to 5.

8. Computer-readable medium having a computer program product according to Claim 7 stored thereon.

## Revendications

1. Procédé de commande d'une pédale d'accélérateur (11) haptique dans un véhicule automobile (3), la pédale d'accélérateur (11) pouvant être déplacée à l'intérieur d'une plage de déplacement située entre une position de repos (P₀) et une position d'actionnement maximal (Pₘ) et pouvant être excitée à l'aide d'un actionneur (13) pour produire un signal pouvant être perçu de façon haptique, **caractérisé en ce que** le procédé comporte les étapes suivantes :
calcul d'une position de signal (Pₛ) prévisible dans laquelle un signal pouvant être perçu de façon haptique doit être produit à un instant donné prévu dans le futur par la pédale d'accélérateur (11), la position de signal (Pₛ) prévisible se situant entre la position de repos (P₀) et la position d'actionnement maximal (Pₘ) ; et
agencement de l'actionneur (13) pendant que la pédale d'accélérateur (11) se trouve dans une position actuelle prévue entre la position de repos (P₀) et la position de signal (Pₛ) prévisible, de telle sorte que l'actionneur (13) est relié activement à la pédale d'accélérateur (11) lorsque la pédale d'accélérateur (11) atteint la position de signal (Ps) atteignable.

2. Procédé selon la revendication 1, la position de signal (Pₛ) prévisible pouvant se situer exclusivement à l'intérieur d'une plage partielle située entre 5 % et 95 % de la plage de déplacement totale de la pédale d'accélérateur (11).

3. Procédé selon la revendication 1 ou 2, la position de signal (Pₛ) prévisible variant en fonction d'une situation de conduite et/ou en fonction d'un état de fonctionnement du véhicule et l'agencement de l'actionneur (13) étant adapté en continu au niveau de la position de signal (Pₛ) prévisible variant dans le temps.

4. Procédé selon l'une quelconque des revendications 1 à 3, la position de signal (Pₛ) prévisible étant une position de point de pression et l'actionneur (13) sollicitant la pédale d'accélérateur (11) avec une force de rappel supplémentaire visant à rendre plus difficile une dépressurisation supplémentaire de la pédale d'accélérateur (11) lorsque la pédale d'accélérateur (11) atteint la position de point de pression.

5. Procédé selon l'une quelconque des revendications 1 à 4, l'adaptation de l'agencement de l'actionneur (13) à la position de signal (Pₛ) prévisible étant temporairement interrompue lorsque sur la base d'un événement non prévu, un signal pouvant être perçus de façon haptique doit être produit et l'actionneur (13) étant temporairement disposé de telle sorte qu'il est actuellement activement relié à la pédale d'accélérateur (11), pour produire le signal pouvant être perçus de façon haptique.

6. Appareil de commande (3) servant à commander une pédale d'accélérateur (11) haptique dans un véhicule automobile (1), l'appareil de commande (3) étant conçu pour mettre en oeuvre un procédé selon l'une quelconque des revendications 1 à 5.

7. Produit de programme informatique comprenant des instructions lisibles par ordinateur ordonnant à un appareil de commande (3) commandable de mettre en oeuvre un procédé selon l'une quelconque des revendications 1 à 5.

8. Support lisible par ordinateur avec un produit de programme informatique selon la revendication 7 mémorisé dessus.
